# EUROPEAN PATENT SPECIFICATION

(11) **EP 1 367 742 B1**
(45) Date of publication and mention of the grant of the patent: **08.05.2013**
(21) Application number: 03004660.1
(22) Date of filing: 03.03.2003
(51) Int. Cl.: H04B 7/26

(54) **Radio transmission system with point-multipoint type topology enclosing stations suitable to operate according to multiple operation modes and according to multiple standards**
Funkübertragungssystem in Punkt zu Mehrpunkt Topologie mit Stationen geeignet zum Betrieb in mehreren Betriebsarten und nach mehreren Standards
Système de transmission radio avec une topologie point-multipoint comprenant des stations susceptibles de fonctionner selon des modes de fonctionnement multiples et selon des standards multiples

(30) Priority: 30.05.2002 IT MI20021163
(43) Date of publication of application: 03.12.2003
(73) Proprietor: Siemens Aktiengesellschaft, 80333 München (DE)
(72) Inventor: Cavalli, Giulio, 20159 Milano (IT); Licitra, Gaspare, 20064 Gorgonzola (MI) (IT); Santacesaria, Claudio, 20100 Milano (IT)
(74) Representative: Maier, Daniel Oliver

(56) References cited:
- EP-A- 1 168 700
- EP-A- 1 179 897
- US-A- 5 287 374
- US-A- 6 005 896
- "Broadband Radio Access Networks (BRAN); HIPERACCESS; PHY protocol specification; ETSI TS 101 999" ETSI STANDARDS, EUROPEAN TELECOMMUNICATIONS STANDARDS INSTITUTE, SOPHIA-ANTIPO, FR, vol. BR, no. V111, April 2002 (2002-04), XP014006870 ISSN: 0000-0001
- PATENT ABSTRACTS OF JAPAN vol. 1997, no. 12, 25 December 1997 (1997-12-25) & JP 9 215033 A (KOKUSAI ELECTRIC CO LTD), 15 August 1997 (1997-08-15)

## Description

### FIELD OF THE INVENTION

The present invention finds particular application in radio transmission systems with Point Multi-point topology, but also in other transmission fields on different physical means.

### BACKGROUND OF THE INVENTION

In transmission systems with Point Multi-point topology, called also PMP systems, whichever is the typology of the physical means used, a 'master' station and one or more 'slave' stations called also 'terminals' are generally defined. The following description refers to radio point-multipoint systems even if it has not to be construed as limited to the same, since the invention can be applied also to systems on other physical means or with other topologies. The communications from the master station to one or more slave stations take place on a channel, called 'downstream' channel, inside which, the master station multiplexes, generally in time-division, the traffic for the different stations. The downstream channel is organized in 'frames'. The traffic from the 'slave' stations towards the 'master' station is made on another channel, called 'upstream' channel. Said upstream channel can be separated in frequency-division or in time-division from the downstream one, that is, the transmissions in upstream direction can take place at the same radio frequency at different time intervals or at different radio frequencies.

Other separation techniques between the upstream and downstream channel can be used for other physical means.

The known art includes different typologies of PMP systems and, as it often occurs, different standards, created in different countries or by different standardization institutions. The different standards can have more or less influence on the market. However, we notice that in some cases there is not a prevailing standard and at least two standards acquire importance, because, for instance, they are optimised for different applications; it is the case for instance, of PMP systems in which the European standard has been optimised for the fixed segmentation mode while the American one has been optimised for the variable segmentation mode. As a consequence of the different optimisations, the structure of the frame and of the information units transmitted is different in the two cases.

A fixed segmentation master station receives and transmits information units having fixed length to the terminal stations. A variable segmentation master station receives and transmits information units of variable length. The format of information units and of the frame structure in the two fixed and variable segmentation systems, is different. In variable mode systems the receiver must have the information of the length of each single information unit and said information must be included in a portion, called header of each information unit. Also the frame format differs in the two system modes.

Due to the difference in the format of frames and information units, there is no interoperability between the systems following different standards or different operation methods. This is to say that a terminal, operating according to the first method cannot communicate with a master station operating according to the second methods and vice versa.

The european patent application EP 1179897-A, filed by the same Applicant, discloses a transmission method enabling to use different combinations of modulations and coding defined as "physical layer (PHY) operation modes" adaptively selected according to the channel quality in order to transmit bursts of data sharing the same PHY mode and clusterized in time frames preceded by a preamble. The preamble includes different symbol sequences univocally associated to the PHY modes so as to permit the detection by the receiver. In order to obtain the minimum overhead the different robust PHY modes shall be identified by the preambles having a higher reciprocal distance compared to the reciprocal distance of preambles identifying less robust operation modes (operating in better channel conditions). The used symbol sequences are derived by the so-called CAZAC (Constant Amplitude Zero Auto Correlation)ones.

Having in mind that the use of CAZAC sequences in the preambles for synchronizing the receiver on the actual transmitted PHY mode was already known even before the EP 1179897-A, it shall be concluded that the problem of allowing interoperability between terminals which operate according to different standards, in the specific with either fixed or variable segmentation of transmitted bursts, is not taken in consideration by the cited prior art.

### OBJECT AND SUMMARY OF THE INVENTION

Scope of the present invention is the implementation of a terminal without the mentioned drawback, that is, to implement a terminal of the multi-standard enabling interoperability between systems having different operation methods. Dual operation mode terminals according to the invention are structured in order to avail of some characteristics of the frame structure.

In particular, in many practical cases, the frame structure, irrespective of the system mode, always starts with a preamble, typically inserted in the frame for synchronization purposes. The invention foresees the use of different preambles for interoperability between systems operating according to different operation modes and foresees to avail of this characteristic to construct a multiple operation mode terminal that recognizes the mode to be used on the bases of the preamble received. The operation mode can include the correct interpretation of the frame format and of the format of information units received in the downstream channel, but also the format of the information units transmitted on the upstream channel.

### BRIEF DESCRIPTION OF THE DRAWINGS

The invention, together with further objects and advantages thereof, may be understood from the following description and appreciated with reference to the attached drawings, in which:
**Figure 1** shows the downstream frame structure of a first standard;
**Figure 2** shows the downstream frame structure of a second standard;
**Figure 3** shows the auto-correlation function of each one of the two preambles indicated in the preferred embodiment (dotted line) compared with the cross-correlation of said two preambles (continuous line);
**Figure 4** shows a block diagram of a bicompatible terminal according to a preferred embodiment of the invention.

### DESCRIPTION OF A PREFERRED EMBODIMENT OF THE INVENTION

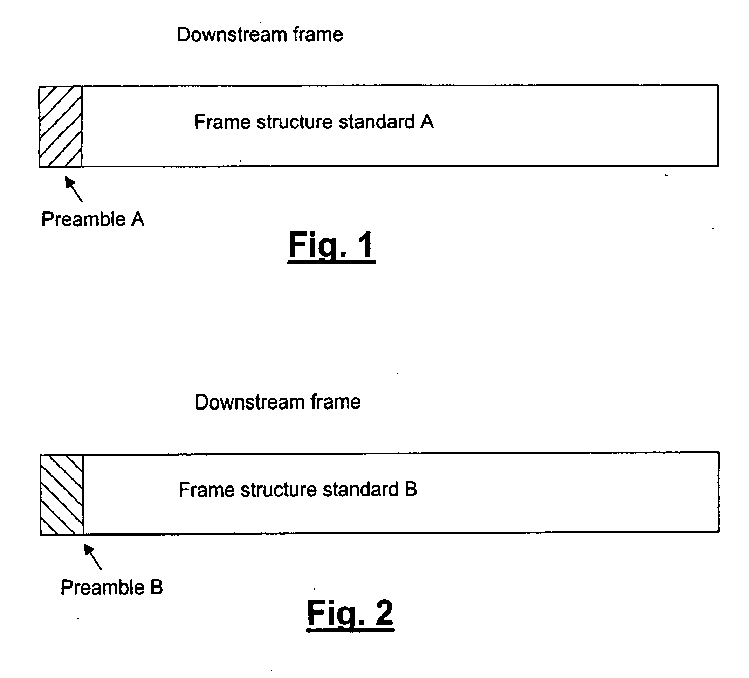

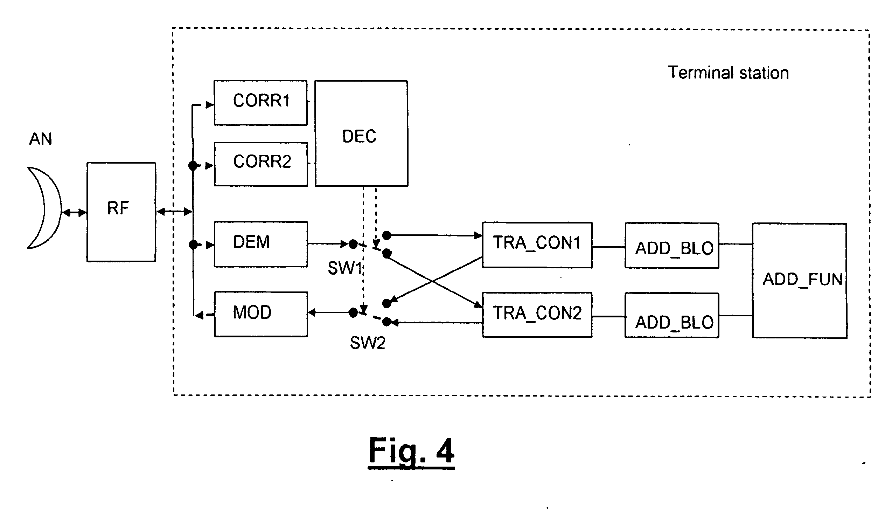

In accordance with the present invention the terminals, to assure interoperability between two system typologies, are equipped with means suitable to operate in the two different modes, as better clarified hereafter with reference to figure 4. When a terminal station synchronises with the downstream channel by means of the frame preamble, identifies the mode of the master station from the type of preamble. The two modes can correspond for instance to two different standards. The above-mentioned terminal station will prepare to listen to a downstream frame structure and consistently transmit, upstream, the information units structured in such a way to result compatible with the operation mode of the master station (Figure 1 and Figure 2).

According to the invention, said preambles must have given cross-correlation properties; in particular, it is necessary that the cross-correlation peak is far lower than the auto-correlation peak.

Only in presence of this characteristic it is possible, in order to identify the standard used by the master, to take advantage of the preamble, which is generally included in the frame, to synchronization and equalization purposes (that is, to perform typical physical layer functions).

Assuming a phase and quadrature modulation (e.g. 4QAM or QPSK, but also 16QAM) the preambles are selected as CAZAC sequences, that is, with four constellation points at constant amplitude; identifying, on the I/Q plane, the four mentioned constellation points of the preamble with 1, -1, j and -j, the two following sequences are identified, a first sequence and a second sequence

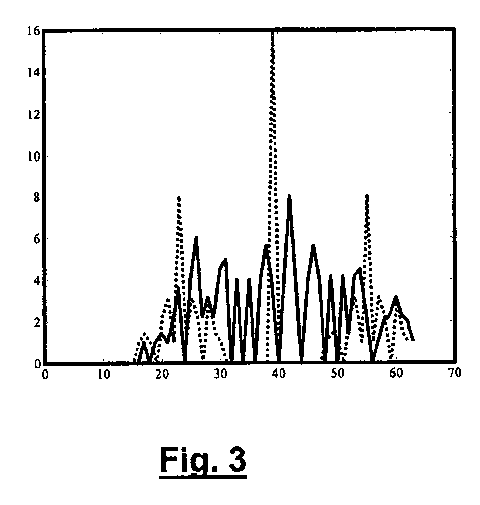

The comparison between the auto-correlation and the cross-correlation is depicted in Figure 3 where it is shown that the cross-correlation peak is one half of the auto-correlation peak.

The four points of the constellation can be associated with the physical points of the constellation in different ways, considering all the rotations and overturning in the I/Q plane and all cyclical permutations of each one of the two preambles indicated above, maintaining the relevant cross-correlation and auto-correlation properties.

Figure 4 shows the general block diagram of a possible terminal implementing the invention.

In particular, figure 4 shows an antenna element AN, connected to a radio unit having RF frequency, connected in turn through an intermediate frequency cable to the terminal station implemented according to the invention.

In fact, this terminal station includes a first and a second correlation unit CORR 1 and CORR 2, the first one being suitable to perform a correlation operation with preamble 1 while the second one being suitable to perform a correlation operation with preamble 2. These correlation units are connected to a demapping unit DEC controlling a couple of switches SW1 and SW2. The switch SW1 is connected to the output of a demodulation unit DEM whose input is connected to the mentioned intermediate frequency cable, while the switch SW2 is connected to the input of a modulation unit MOD.

The switch SW1 is particularly suitable to connect the modulator MOD and the demodulator DEM with two different functions of the base band TRA_{_}CON1 and TRA_{_}CON2 typically defined "transmission convergence" (frame decoding and burst generation means) that implement the two standards. The decision to employ any of these blocks is made by the mentioned demapping unit DEC on the basis of the analysis made by the two correlators CORR (synchronization means), which detect the two different frame preambles. On the contrary, the switch SW2 is suitable to connect the TRA_CON functions with a modulator MOD, thus sending the frame structure compatible with the operation modes of the master station to the antenna AN, always on the basis of the analysis made by the two CORR correlators, that is, on the basis of the state of the output of the demapping unit DEC. The blocks TRA_CON1 and TRA_CON2 are connected to the same number of blocks ADD_{_}BLO1 and ADD_{_}BLO2 that implement functions of the known type and identified in the specific technique with the initials DLC, CL and other functions concerning standard 1 and standard 2, respectively. Blocks ADD_BLO1 and ADD_BLO2 are finally connected to additional ADD_FUN functional units suitable to implement functions not depending on the standard and base band interfaces. Therefore, while a preferred embodiment of the present invention has been shown and described, it should be understood that the present invention is not limited thereto since other embodiments may be made by those skilled in the art without departing from the scope thereof. It is thus contemplated that the present invention encompasses any and all such embodiments covered by the following claims. For instance, one of said embodiments can be the inclusion of additional CORR units, additional TRA_CON units and additional ADD_BLO units in the terminal station in order to implement a terminal station suitable to operate according to a plurality of standards, in accordance with the object mentioned above.

## Claims

1. Transmission system including at least one station, hereinafter called master station, and one or more stations, hereinafter called terminal stations, said master station transmitting to the terminal stations on a communication channel called downstream channel and said terminal stations transmitting towards said master station on a communication channel called upstream channel, said downstream channel being organized in frames each one including at least a frame preamble suitable to enable the synchronization of the terminal stations which include
• synchronization means (CORR1, CORR2) suitable to determine the synchronization of the terminal on at least two different preambles,
**characterized in that** said terminal stations further include:
• at least two decoding means (TRA_CON1,2) to decode different frame structures received on the downstream channel;
• at least two means (TRA_CON1,2) for the generation of different burst formats to be sent on the upstream channel;
• selection means (DEC, SW) controlled by said synchronization means (CORR1, CORR2) to select one of the decoding means (TRA_CON1,2) and one of the burst format generation means (TRA_CON1,2) in relation to the preamble received on the downstream channel synchronized to the terminal,
said different burst formats and said different frame structures satisfying at least the characteristic that they comprise both a fixed segmentation mode having transmission
units of fixed length and a variable segmentation mode having transmission units of variable length.

2. System according to claim 1, **characterized in that** said different frame preambles consist of CAZAC sequences having low reciprocal cross correlation;

3. System according to claim 2, **characterized in that** said CAZAC sequences are cyclically repeated.

4. System according to claim 2 or 3, **characterized in that** said terminal stations are suitable to receive two different CAZAC sequences.

5. System according to claim 4, **characterized in that** said two CAZAC sequences are described on the I/Q plane, where 1, -1, j and -j represent the four symbols of the QPSK modulation or the four constellation points of the preamble for any modulation, from a first sequence and from a second sequence

6. System according to claim 5, **characterized in that** said terminal stations are suitable to detect any rotation of the above-mentioned sequences.

7. System according to claim 5, **characterized in that** said terminal stations are suitable to detect any overturning of the above-mentioned sequences.

8. System according to claim 5, **characterized in that** said terminal stations are suitable to detect any cyclical permutation of the above-mentioned sequences.

9. System according to claim 1, **characterized in that** the burst formats have been defined by different standardization institutes.

## Patentansprüche

1. Übertragungssystem mit mindestens einer Station, die nachfolgend als Hauptstation bezeichnet wird, und einer oder mehreren Stationen, die nachfolgend als Datenstationen bezeichnet werden, wobei die Hauptstation auf einem Kommunikationskanal, der als Abwärtskanal bezeichnet wird, an die Datenstationen sendet und die Datenstationen auf einem Kommunikationskanal, der als Aufwärtskanal bezeichnet wird, zur Hauptstation sendet, wobei der Abwärtskanal in Frames organisiert ist, von denen jeder zumindest eine Frame-Präambel aufweist, die sich dafür eignet, die Synchronisierung der Datenstationen zu ermöglichen, welche Folgendes aufweisen:
• Synchronisationsmittel (CORR1, CORR2), die sich dafür eignen, die Synchronisierung der Datenstation auf mindestens zwei verschiedenen Präambeln zu bestimmen,
**dadurch gekennzeichnet, dass** die die Datenstationen ferner Folgendes aufweisen:
• mindestens zwei Decodiermittel (TRA_CON1,2) für das Dekodieren verschiedender Frame-Strukturen, die auf dem Abwärtskanal empfangen wurden,
• mindestens zwei Mittel (TRA_CON1,2) für das Erzeugen verschiedener Burst-Formate, die auf dem Aufwärtskanal gesendet werden sollen,
• Auswahlmittel (DEC, SW), die von den Synchronisationsmitteln (CORR1, CORR2) so gesteuert werden, dass in Bezug auf die Präambel, die auf dem mit der Datenstation synchronisierten Abwärtskanal empfangen wurde, eines der Decodiermittel (TRA_CON1,2) und eines der Burst-Formaterzeugungsmittel (TRA_CON1,2) ausgewählt wird,
wobei die verschiedenen Burst-Formate und die verschiedenen Frame-Strukturen mindestens dem Merkmal entsprechen, dass sie sowohl einen festen Segmentierungsmodus mit Übertragungseinheiten fester Länge als auch einen variablen Segmentierungsmodus mit Übertragungseinheiten variabler Länge umfassen.

2. System nach Anspruch 1, **dadurch gekennzeichnet, dass** die verschiedenen Frame-Präambeln aus CAZAC-Sequenzen mit geringer reziproker Kreuzkorrelation bestehen.

3. System nach Anspruch 2, **dadurch gekennzeichnet, dass** die CAZAC-Sequenzen zyklisch wiederholt werden.

4. System nach Anspruch 2 oder 3, **dadurch gekennzeichnet, dass** die Datenstationen zwei verschiedene CAZAC-Sequenzen empfangen können.

5. System nach Anspruch 4, **dadurch gekennzeichnet, dass** die zwei CAZAC-Sequenzen auf der I/Q-Ebene beschrieben werden, wobei 1, -1, j und -j die vier Symbole der Quadratur-Phasensprungmodulation oder die vier Konstellationspunkte der Präambel für jede Modulation darstellen, und zwar aus einer ersten Sequenz und aus einer zweiten Sequenz

6. System nach Anspruch 5, **dadurch gekennzeichnet, dass** die Datenstationen eine Rotation der oben erwähnten Sequenzen erkennen können.

7. System nach Anspruch 5, **dadurch gekennzeichnet, dass** die Datenstationen ein Umkippen der oben erwähnten Sequenzen erkennen können.

8. System nach Anspruch 5, **dadurch gekennzeichnet, dass** die Datenstationen eine zyklische Permutation der oben erwähnten Sequenzen erkennen können.

9. System nach Anspruch 1, **dadurch gekennzeichnet, dass** die Burst-Formate von unterschiedlichen Normungsinstituten definiert worden sind.

## Revendications

1. Un système de transmission comprenant au moins une station, appelée ci-après station maître, et une ou plusieurs stations, appelées ci-après stations terminales, ladite station maître transmettant aux stations terminales sur un canal de communication appelé canal aval et lesdites stations terminales transmettant vers ladite station maître sur un canal de communication appelé canal amont, ledit canal aval étant organisé en trames, chacune d'elles comprenant au moins un préambule de trame adapté de façon à permettre la synchronisation des stations terminales qui comprennent
• un moyen de synchronisation (CORR1, CORR2) adapté de façon à déterminer la synchronisation du terminal sur au moins deux préambules différents,
**caractérisé en ce que** lesdites stations terminales comprennent en outre :
• au moins deux moyens de décodage (TRA_CON1,2) destinés à décoder des structures de trame différentes reçues sur le canal aval,
• au moins deux moyens (TRA_CON1,2) de génération de formats de salve différents à envoyer sur le canal amont,
• un moyen de sélection (DEC, SW) commandé par ledit moyen de synchronisation (CORR1, CORR2) destiné à sélectionner l'un des moyens de décodage (TRA_CON1,2) et l'un des moyens de génération de format de salve (TRA_CON1,2) en relation avec le préambule reçu sur le canal aval synchronisé sur le terminal,
lesdits formats de salve différents et lesdites structures de trame différentes satisfaisant au moins la caractéristique qu'ils comprennent tous les deux un mode de segmentation fixe possédant des unités de transmission de longueur fixe et un mode de segmentation variable possédant des unités de transmission de longueur variable.

2. Un système selon la revendication 1, **caractérisé en ce que** lesdits préambules de trame différents sont constitués de séquences CAZAC possédant une corrélation croisée réciproque faible,

3. Un système selon la revendication 2, **caractérisé en ce que** lesdites séquences CAZAC sont répétées de manière cyclique.

4. Un système selon la revendication 2 ou 3, **caractérisé en ce que** lesdites stations terminales sont adaptées de façon à recevoir deux séquences CAZAC différentes.

5. Un système selon la revendication 4, **caractérisé en ce que** lesdites deux séquences CAZAC sont décrites sur le plan I/Q, où 1, -1, j et -j représentent les quatre symboles de la modulation QPSK ou les quatre points de constellation du préambule pour toute modulation, à partir d'une première séquence et à partir d'une deuxième séquence

6. Un système selon la revendication 5, **caractérisé en ce que** lesdites stations terminales sont adaptées de façon à détecter toute rotation des séquences mentionnées ci-dessus.

7. Un système selon la revendication 5, **caractérisé en ce que** lesdites stations terminales sont adaptées de façon à détecter toute inversion des séquences mentionnées ci-dessus.

8. Un système selon la revendication 5, **caractérisé en ce que** lesdites stations terminales sont adaptées de façon à détecter toute permutation cyclique des séquences mentionnées ci-dessus.

9. Un système selon la revendication 1, **caractérisé en ce que** les formats de salve ont été définis par des organismes de normalisation différents.
